# EUROPEAN PATENT APPLICATION

(11) **EP 3 734 733 A1**
(43) Date of publication of application: **04.11.2020**
(21) Application number: 18895441.6
(22) Date of filing: 18.12.2018
(51) Int. Cl.: H01M 8/18, H01M 8/04

(54) **REDOX FLOW BATTERY**

(30) Priority: 27.12.2017 JP 2017252664
(71) Applicant: Showa Denko K.K., Tokyo 105-8518 (JP)
(72) Inventor: TOMITA Miyuki, Tokyo 105-8518 (JP); SUZUKI Masahiro, Tokyo 105-8518 (JP); ZHOU Tingting, Tokyo 105-8518 (JP)
(74) Representative: Strehl Schübel-Hopf & Partner
(86) International application number: PCT/JP2018/046620
(87) International publication number: WO 2019/131341

(57) **Abstract**

The present invention provides a redox flow battery capable of inhibiting an increase in a pressure within a battery system, which is caused by generation of hydrogen gas at a negative electrode. This redox flow battery 1 has: a battery cell 10 including a positive electrode 11, a negative electrode 12, and an ion exchange membrane 13; positive electrode-side electrolyte tank 20 provided in correspondence with the positive electrode 11 and containing an electrolyte which includes a positive electrode active material; a negative electrode-side electrolyte tank 30 provided in correspondence with the negative electrode 12 and containing an electrolyte which includes a negative electrode active material; a positive electrode-side pipe connecting the battery cell 10 to the positive electrode-side electrolyte tank 20; and a negative electrode-side pipe connecting the battery cell 10 to the negative electrode-side electrolyte tank 30, wherein the redox flow battery 1 performs charge and discharge by being configured to circulate the electrolytes respectively between the battery cell 10 and the positive electrode-side electrolyte tank 20 through the positive electrode-side pipe 21, 22 connecting the battery cell 10 to the positive electrode-side electrolyte tank 20 and between the battery cell 10 and the negative electrode-side electrolyte tank 30 through the negative electrode-side pipe 31, 32 connecting the battery cell 10 to the negative electrode-side electrolyte tank 30. A hydrogen gas amount decreasing means 40 having a hydrogen gas amount decreasing device 60 is provided on the negative electrode-side pipe 31, 32.

## Description

### TECHNICAL FIELD

The present invention relates to a redox flow battery.

### BACKGROUND ART

Redox flow batteries have been known as large capacity storage batteries. In general, the redox flow battery has an ion exchange membrane separating electrolytes from each other, and electrodes provided on both sides of the ion exchange membrane. The electrolytes containing metal ions as active materials whose valence changes through oxidation-reduction are used so that an oxidation reaction at one of the electrodes and a reduction reaction at the other progress simultaneously, whereby charge and discharge are carried out.

In the redox flow battery at a high charge depth, hydrogen (H₂) gas tends to be generated because a reaction through which hydrogen ions (H⁺) receive electrons (e⁻) occurs at the negative electrode. If the generated hydrogen gas stays in a circulation system forming part of the battery, a problem arises in that the pressure in the circulation system increases. Further, this situation requires control which prevents the hydrogen gas from leaking out of the circulation system forming part of the battery, and from exploding, for example.

For example, Patent Document 1 discloses a technique to address the above problem of the generation of hydrogen gas at a negative electrode. According to this technique, in a vanadium redox battery, a hydrogen oxidation catalyst supported on a surface of a carbon material is provided on a surface of the positive electrode including a carbon material or in an area on a positive electrode side in a battery cell, so that hydrogen gas generated at the negative electrode is oxidized by the hydrogen oxidation catalyst supported on the surface of the carbon material. Patent Document 2 discloses a technique relating to a system including at least one flow battery consisting of: two half cells which are separated from each other by a separator membrane and through which electrolytes having different charges flow; and tanks each containing an associated one of the electrolytes, each of the half cells being provided with at least one electrode. In this system, a common gas volume is provided to connect the tanks to each other. Further, in the tank of the electrolyte of a positive electrode side, at least one catalyst for reducing a reaction partner of a redox pair of the positive electrode side is disposed in contact with both the electrolyte of the positive electrode side and the common gas volume.

Patent Document 1: Japanese Unexamined Patent Application, Publication No. 2016-186853
Patent Document 2: Japanese Unexamined Patent Application (Translation of PCT Application), Publication No. 2015-504233

### DISCLOSURE OF THE INVENTION

### Problems to be Solved by the Invention

However, while being usable for a vanadium solid salt battery, the technique of Patent Document 1 is unsuitable for a flow battery because the supported catalyst may become detached from the positive electrode as the electrolyte circulates, and it is difficult to move the hydrogen gas from the negative electrode to the positive electrode. According to the technique of Patent Document 2, it is necessary to provide, for example, the common gas volume connecting the tank of the electrolyte of the positive electrode side to the tank of the electrolyte of the negative electrode side. As a result, a limitation is imposed on the structure of the electrolyte tanks. Therefore, there has been a demand for other measures for handling hydrogen gas generated at a negative electrode.

The present invention has been proposed in view of the circumstances described above, and it is an object of the present invention to provide a redox flow battery capable of effectively inhibiting an increase in a pressure which can be caused by generation of hydrogen (H₂) gas at a negative electrode.

### Means for Solving the Problems

The present inventors have conducted intensive studies to achieve the above object. As a result, the present inventors have made the following findings to achieve the present invention: the above object can be achieved by providing a hydrogen gas amount decreasing means on a negative electrode-side pipe connecting a negative electrode-side electrolyte tank containing an electrolyte which includes a negative electrode active material to a battery cell, the means being capable of decreasing an amount of generated hydrogen gas. Specifically, the present invention provides the following.

A first aspect of the present invention is directed to a redox flow battery including: a battery cell including a positive electrode, a negative electrode, and an ion exchange membrane separating the positive electrode from the negative electrode; a positive electrode-side electrolyte tank provided in correspondence with the positive electrode and containing an electrolyte which includes a positive electrode active material; a negative electrode-side electrolyte tank provided in correspondence with the negative electrode and containing an electrolyte which includes a negative electrode active material; a positive electrode-side pipe connecting the battery cell to the positive electrode-side electrolyte tank; and a negative electrode-side pipe connecting the battery cell to the negative electrode-side electrolyte tank. The redox flow battery performs charge and discharge by being configured to circulate the electrolytes respectively between the battery cell and the positive electrode-side electrolyte tank through the positive electrode-side pipe connecting the battery cell to the positive electrode-side electrolyte tank and between the battery cell and the negative electrode-side electrolyte tank through the negative electrode-side pipe connecting the battery cell to the negative electrode-side electrolyte tank. A hydrogen gas amount decreasing means having a hydrogen gas amount decreasing device is provided on the negative electrode-side pipe.

A second aspect of the present invention is an embodiment of the redox flow battery according to the first aspect. In the second aspect, the hydrogen gas amount decreasing means has a gas-liquid separation device provided on the negative electrode-side pipe, and the hydrogen gas amount decreasing device communicates with the gas-liquid separation device.

A third aspect of the present invention is an embodiment of the redox flow battery according to the first or second aspect. In the third aspect, the hydrogen gas amount decreasing device is a hydrogen gas absorption device that absorbs hydrogen gas or a hydrogen gas oxidation device that oxidizes hydrogen gas.

A fourth aspect of the present invention is an embodiment of the redox flow battery according to any one of the first to third aspects. In the fourth aspect, the negative electrode-side pipe includes: a negative electrode-side forward pipe as a supply path through which the electrolyte is supplied from the negative electrode-side electrolyte tank to the battery cell; and a negative electrode-side return pipe as a discharge path through which the electrolyte is discharged from the battery cell to the negative electrode-side electrolyte tank. The hydrogen gas amount decreasing means is provided on the negative electrode-side return pipe.

A fifth aspect of the present invention is an embodiment of the redox flow battery according to the fourth aspect. In the fifth aspect, the battery cell includes a positive electrode-side cell on a side of the positive electrode and a negative electrode-side cell on a side of the negative electrode, the positive electrode-side cell and the negative electrode-side cell being partitioned from each other by the ion exchange membrane. The negative electrode-side return pipe connects the negative electrode-side cell to the negative electrode-side electrolyte tank. The negative electrode-side cell has a discharge port through which the electrolyte is discharged, and which is located on a top of the negative electrode-side cell.

A sixth aspect of the present invention is an embodiment of the redox flow battery according to the fourth or fifth aspect. In the sixth aspect, the hydrogen gas amount decreasing means is provided at a location on the negative electrode-side return pipe, the location being adjacent to the battery cell.

A seventh aspect of the present invention is an embodiment of the redox flow battery according to any one of the first to sixth aspects. In the seventh aspect, the redox flow battery is a vanadium-based redox flow battery.

### Effects of the Invention

The redox flow battery of the present invention can effectively inhibit a pressure increase that can be caused by generation of hydrogen gas at a negative electrode. Thus, the redox flow battery of the present invention is highly reliable.

### BRIEF DESCRIPTION OF THE DRAWINGS

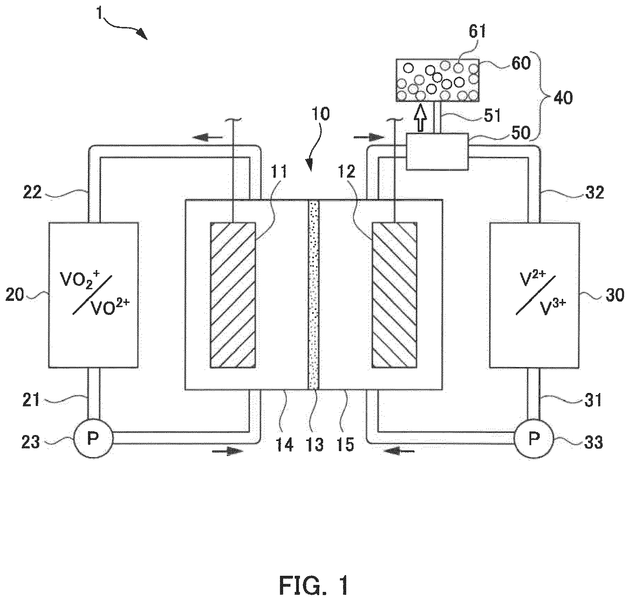

FIG. 1 schematically shows a configuration of an example of a redox flow battery according to the present embodiment.

### PREFERRED MODE FOR CARRYING OUT THE INVENTION

A specific embodiment (hereinafter, referred to as "the present embodiment") will be described in detail with reference to the drawing. It should be noted that the present invention is not limited to the following embodiment, and various modifications can be made without changing the spirit of the present invention.

FIG. 1 schematically shows a configuration of an example of a redox flow battery according to the present embodiment. As shown in FIG. 1, the redox flow battery 1 according to the present embodiment has a battery cell 10 including a positive electrode 11, a negative electrode 12, and an ion exchange membrane 13 separating the positive electrode 11 from the negative electrode 12. The redox flow battery 1 further has: a positive electrode-side electrolyte tank 20 provided in correspondence with the positive electrode 11 and containing an electrolyte which includes a positive electrode active material; a negative electrode-side electrolyte tank 30 provided in correspondence with the negative electrode 12 and containing an electrolyte which includes a negative electrode active material; a positive electrode-side pipe connecting the battery cell 10 to the positive electrode-side electrolyte tank 20; and a negative electrode-side pipe connecting the battery cell 10 to the negative electrode-side electrolyte tank 30. Specifically, in the present embodiment, the battery cell 10 includes a positive electrode-side cell 14 on a side of the positive electrode 11 and a negative electrode-side cell 15 on a side of the negative electrode 12, the positive electrode-side cell 14 and the negative electrode-side cell 15 being partitioned from each other by the ion exchange membrane 13 that separates the positive electrode 11 from the negative electrode 12. Here, the positive electrode-side cell 14 refers to a positive electrode chamber housing the positive electrode 11. The negative electrode-side cell 15 refers to a negative electrode chamber housing the negative electrode 12. The positive electrode-side cell 14 in the battery cell 10 is connected to the positive electrode-side electrolyte tank 20 through the positive electrode-side pipe, thereby allowing the positive electrode electrolyte to circulate between the positive electrode-side cell 14 and the tank 20. The negative electrode-side cell 15 in the battery cell 10 is connected to the negative electrode-side electrolyte tank 30 through the negative electrode-side pipe, thereby allowing the negative electrode electrolyte to circulate between the negative electrode-side cell 15 and the tank 30.

Note that although FIG. 1 shows the redox flow battery 1 as a redox flow battery installed alone, it is preferable to successively arrange a plurality of redox flow batteries 1, each of which is a smallest unit, and to use the plurality of redox flow batteries 1 in a form referred to as a battery cell stack.

In this embodiment, the positive electrode-side pipe that connects the battery cell 10 to the positive electrode-side electrolyte tank 20 includes: a positive electrode-side forward pipe 21 as a supply path through which the electrolyte is supplied from the positive electrode-side electrolyte tank 20 to the battery cell 10 (more strictly, to the positive electrode-side cell 14); and a positive electrode-side return pipe 22 as a discharge path through which the electrolyte is discharged from the battery cell 10 to the positive electrode-side electrolyte tank 20. The positive electrode-side forward pipe 21 is provided so as to connect the positive electrode-side electrolyte tank 20 to a bottom portion of the battery cell 10, while the positive electrode-side return pipe 22 is provided so as to connect an upper portion of the battery cell 10 to the positive electrode-side electrolyte tank 20.

Likewise, in the present embodiment, the negative electrode-side pipe that connects the battery cell 10 to the negative electrode-side electrolyte tank 30 includes: a negative electrode-side forward pipe 31 as a supply path through which the electrolyte is supplied from the negative electrode-side electrolyte tank 30 to the battery cell 10 (more strictly, to the negative electrode-side cell 15); and a negative electrode-side return pipe 32 as a discharge path through which the electrolyte is discharged from the battery cell 10 to the negative electrode-side electrolyte tank 30. The negative electrode-side forward pipe 31 is provided so as to connect the negative electrode side-electrolyte tank 30 to a bottom portion of the battery cell 10, while the negative electrode-side return pipe 32 is provided so as to connect an upper portion of the battery cell 10 to the negative electrode-side electrolyte tank 30. In the configuration shown in FIG. 2, a discharge port through which the electrolyte is discharged from the negative electrode-side cell 15 is located at the top (highest point) of the negative electrode-side cell 15. This configuration is preferable since hydrogen gas generated at the negative electrode 12 is easily released from the negative electrode-side cell 15, and consequently, the hydrogen gas is inhibited from staying in the battery cell 10. Note that the vertical direction described by terms such as the highest point indicates the vertical direction of the redox flow battery in an installed state in the present embodiment.

Further, in the present embodiment, a pump 23 is provided on the positive electrode-side forward pipe 21, and a pump 33 is provided on the negative electrode-side forward pipe 31. The pump 23 and the pump 33 may be provided on the positive electrode-side return pipe 22 and the negative electrode-side return pipe 32, respectively. However, if such feed pumps are installed on the return pipes (the positive electrode-side return pipe 22, the negative electrode-side return pipe 32) that are the discharge paths through which the electrolytes are discharged from the battery cell 10 to the electrolyte tanks (the positive electrode-side electrolyte tank 20, the negative electrode-side electrolyte tank 30), a pressure in the battery cell 10 decreases and bubbles are likely to be generated. It is therefore preferable to install the feed pumps on the forward pipes (the positive electrode-side forward pipe 21, the negative electrode-side forward pipe 31). This configuration enables the electrolytes to be fed efficiently and stably. Thus, it is preferable to provide the pump 23 and the pump 33 on the forward pipes (the positive electrode-side forward pipe 21, the negative electrode-side forward pipe 31), as in the present embodiment.

As can be seen, the redox flow battery 1 of the present embodiment includes the pump 23 on the positive electrode-side pipe and the pump 33 on the negative electrode-side pipe, and is configured to operate the pumps 23 and 33 to circulate the electrolytes through the positive electrode-side pipe (the positive electrode-side forward pipe 21, the positive electrode-side return pipe 22) connecting the battery cell 10 to the positive electrode-side electrolyte tank 20, and through the negative electrode-side pipe (the negative electrode-side forward pipe 31, the negative electrode-side return pipe 32) connecting the battery cell 10 to the negative electrode-side electrolyte tank 30. With this configuration, in the redox flow battery 1, a charge/discharge reaction occurs in the battery cell 10 while the electrolytes containing active materials are circulated, whereby storage of electric power (charge) or extraction of electric power (discharge) is implemented. The black arrows shown in the drawing each indicate a direction in which the electrolyte moves (circulates).

Further, in the present embodiment, a hydrogen gas amount decreasing means 40 is provided on the negative electrode-side pipe (the negative electrode-side forward pipe 31, the negative electrode-side return pipe 32), the means 40 having a hydrogen gas amount decreasing device 60 that decreases the amount of hydrogen gas. The hydrogen gas amount decreasing means 40 enables a decrease in the amount of hydrogen gas present in the negative electrode-side pipe. The details of the hydrogen gas amount decreasing means 40 and the hydrogen gas amount decreasing device 60 will be described later. In the configuration shown in FIG. 1, the hydrogen gas amount decreasing means 40 is composed of: a gas-liquid separation device 50 that is provided on the negative electrode-side return pipe 32 and separates the electrolyte and hydrogen gas from each other; and the hydrogen gas amount decreasing device 60 that is connected to the gas-liquid separation device 50 via a pipe 51 and thereby communicates with the gas-liquid separation device 50. FIG. 1 shows a case where the hydrogen gas amount decreasing means 40 (strictly, the gas-liquid separation device 50 included in the hydrogen gas amount decreasing means 40) is provided at a location on the negative electrode-side return pipe 32, the location being adjacent to the battery cell 10. Note that the hydrogen gas amount decreasing means 40 does not have to have the gas-liquid separation device 50. In that case, the hydrogen gas amount decreasing device 60 may be provided directly on a return pipe, such as the negative electrode-side return pipe 32.

The hydrogen gas amount decreasing means 40 provided on the negative electrode-side pipe has the hydrogen gas amount decreasing device 60 that decreases the amount of hydrogen gas, and is not particularly limited, as long as it can decrease the amount of hydrogen gas generated at the negative electrode 12. Examples of the hydrogen gas amount decreasing device 60 include a hydrogen gas absorption device including a hydrogen gas absorber, such as a hydrogen-absorbing metal that absorbs hydrogen, such as palladium (Pd) or yttrium (Y), a hydrogen-absorbing alloy, and a hydrogen-absorbing catalyst. Alternatively, a hydrogen gas oxidation device including a hydrogen oxidation catalyst that oxidizes hydrogen may be used as the hydrogen gas amount decreasing device 60. Examples of the hydrogen oxidation catalyst include oxides of transition metals. Among these oxides, an oxide of iron, an oxide of cobalt, or an oxide of nickel is more preferable in order to reduce costs and enhance the efficiency in decreasing the amount of hydrogen gas. In a case where the hydrogen gas amount decreasing device 60 is configured as a hydrogen gas absorption device, the hydrogen gas absorption device absorbs at least a portion of hydrogen gas sent to the hydrogen gas amount decreasing device 60. As a result, the amount of hydrogen gas in the circulation system can be decreased. In a case where the hydrogen gas amount decreasing device 60 is configured as a hydrogen gas oxidation device, the hydrogen gas oxidation device oxidizes and converts hydrogen gas generated at the negative electrode into water. As a result, the amount of hydrogen gas in the circulation system can be decreased. A mode of including the hydrogen gas absorber in the hydrogen gas absorption device and a mode of including the hydrogen oxidation catalyst in the hydrogen gas oxidation device are not particularly limited. It is suitable that the sent hydrogen gas be absorbed or oxidized to be decreased. For example, the hydrogen gas absorption device or the hydrogen gas oxidation device may be filled with the hydrogen gas absorber or the hydrogen oxidation catalyst, or may include the hydrogen gas absorber or the hydrogen oxidation catalyst dispersed therein. Alternatively, a member provided on an inner surface of the hydrogen gas absorption device or the hydrogen gas oxidation device may be coated with the hydrogen gas absorber or the hydrogen oxidation catalyst, for example. Note that FIG. 1 shows an embodiment in which the hydrogen gas amount decreasing device 60 of the hydrogen gas amount decreasing means 40 is implemented by a hydrogen gas absorption device including a hydrogen gas absorber 61 dispersed therein.

Here, in the redox flow battery 1, an oxidation reaction or a reduction reaction occurs at the positive electrode 11 or the negative electrode 12 at the time of charge or discharge. The reactions occurring in a vanadium-based redox flow battery are described below as examples.

### [Charge]

Positive electrode:

   VO²⁺ + H₂O → VO₂⁺ + e⁻ + 2H⁺
Negative electrode:

   V³⁺ + e⁻ → V²⁺

### [Discharge]

Positive electrode:

   VO²⁺ + e⁻ + 2H⁺ → VO²⁺ + H₂O
Negative electrode:

   V²⁺ → V3⁺ + e⁻

In the redox flow battery, during charge, particularly in the case of charge at a high charge depth, hydrogen (H₂) gas may be generated because a reaction through which hydrogen ions (H⁺) receive electrons (e⁻) occurs at the negative electrode 12. The generated hydrogen gas stays in the battery cell 10 and in the negative electrode-side electrolyte tank 30 and the negative electrode-side pipe after circulating together with the electrolyte. In particular, the hydrogen gas tends to adhere, in the form of bubbles, to the inner surface of the pipe connecting the battery cell 10 to the negative electrode-side electrolyte tank 30. It is therefore likely that the hydrogen gas stays in this pipe. Hydrogen staying in the system of the battery causes a problem in that a pressure increases. To address this problem, in the present embodiment, the hydrogen gas amount decreasing means 40 is provided on the negative electrode-side pipe so that the hydrogen gas amount decreasing means 40 absorbs or oxidizes at least a portion of the hydrogen (H₂) gas generated at the negative electrode 12, thereby achieving a decrease in the hydrogen gas.

As can be seen, in the present embodiment, even if hydrogen gas is generated at the negative electrode 12, the hydrogen gas amount decreasing means 40 provided on the negative electrode-side pipe can decrease the amount of the hydrogen gas. This feature can effectively inhibit a pressure increase that can be caused by accumulation of the generated hydrogen gas. Further, in the present embodiment, the hydrogen gas amount decreasing means 40 is provided on the negative electrode-side pipe, and does not need to be provided in the battery cell 10. Thus, unlike the technique of Patent Document 1, it is no longer necessary to move hydrogen from the negative electrode side to the positive electrode side. Furthermore, unlike the technique of Patent Document 2, in the present embodiment, there is no need to design the positive electrode-side electrolyte tank 20 and the negative electrode-side electrolyte tank 30 to have a special structure. In the present embodiment, no particular limitation is imposed on the structure of the positive electrode-side electrolyte tank 20 and the negative electrode-side electrolyte tank 30, and various structures can be adopted.

As shown in FIG. 1, in the present embodiment, the hydrogen gas amount decreasing means 40 having the gas-liquid separation device 50 is provided on the negative electrode-side pipe. The gas-liquid separation device 50 separates hydrogen gas from the electrolyte. The hydrogen gas separated by the gas-liquid separation device 50 is moved to the hydrogen gas amount decreasing device 60 via the pipe 51. As a result, the hydrogen gas amount decreasing means 40 improves in efficiency in decreasing the hydrogen gas amount (efficiency in hydrogen gas absorption, or efficiency in hydrogen gas oxidation), as compared with a case where hydrogen gas is moved directly to the hydrogen gas amount decreasing device 60, together with the electrolyte and the like. This feature makes it possible to further inhibit the pressure increase that can be caused by the generation of hydrogen gas at the negative electrode 12. The open arrow shown in the drawing indicates a direction in which a gas including the hydrogen gas separated by the gas-liquid separation device 50 is moved.

It is suitable to provide the hydrogen gas amount decreasing means 40 on the negative electrode-side pipe. However, it is preferable to provide the hydrogen gas amount decreasing means 40 at a location on the negative electrode-side pipe, which location is where hydrogen gas is likely to stay. For example, although the hydrogen gas amount decreasing means 40 may be provided on the negative electrode-side forward pipe 31 or the negative electrode-side return pipe 32, it is preferable to provide it on the negative electrode-side return pipe 32, as in the present embodiment. Since the negative electrode-side return pipe 32 is a discharge path through which the electrolyte is discharged from the battery cell 10 to the negative electrode-side electrolyte tank 30, by providing the hydrogen gas amount decreasing means 40 on the negative electrode-side return pipe 32, the hydrogen gas generated at the negative electrode 12 in the battery cell 10 can be decreased at an early stage.

Although the hydrogen gas amount decreasing means 40 may be provided at any location on the negative electrode-side return pipe 32, it is preferable to provide it at a location on the negative electrode-side return pipe 32 that is adjacent to the battery cell 10. That is, the hydrogen gas amount decreasing means 40 is preferably provided at a location on the negative electrode-side return pipe 32 that is in a vicinity of the electrolyte outlet (discharge port) of the battery cell 10, the electrolyte outlet being close to the negative electrode 12 at which hydrogen gas is generated. FIG. 1 shows, as an example, a device configuration in a case where the battery cell 10 and the negative electrode-side electrolyte tank 30 are arranged side by side. In this example, the negative electrode-side return pipe 32 is composed of: a first vertical pipe portion extending substantially vertically upward from an upper portion of the battery cell 10; a horizontal pipe portion connected to the vertical pipe portion and extending substantially horizontally; and a second vertical pipe portion connected to the horizontal pipe portion and to an upper portion of the negative electrode-side electrolyte tank 30, and extending substantially vertically downward. The hydrogen gas amount decreasing means 40 is preferably provided on the first vertical pipe portion of the negative electrode-side return pipe 32, the first vertical pipe portion residing in the vicinity of the electrolyte outlet (discharge port) of the battery cell 10. This is because in the negative electrode-side return pipe 32, the vicinity of the electrolyte outlet (discharge port) of the battery cell 10 is close to the negative electrode 12 and is a location where the hydrogen gas generated at the negative electrode 12 is likely to stay.

Note that although FIG. 1 shows the single hydrogen gas amount decreasing means 40 provided on the negative electrode-side pipe, it is conceivable to provide a plurality of hydrogen gas amount decreasing means 40.

In the redox flow battery 1 according to the present embodiment, the positive electrode 11 and the negative electrode 12 are not limited to particular electrodes, and known electrodes can be employed as the positive and negative electrodes 11 and 12. It is preferable that each of the electrodes 11 and 12 simply provide a place where the active material in the electrolyte causes the oxidation-reduction reaction in the battery cell 10 while the electrode per se do not react, have a structure and a shape with high permeability for the electrolyte, have as large a surface area as possible, and be low in electric resistance. Furthermore, from the viewpoint of activation of the oxidation-reduction reaction, the electrodes 11 and 12 preferably have a high affinity with the electrolyte (aqueous solution). In addition, from the viewpoint of prevention of decomposition of water as a side reaction, the electrodes 11 and 12 preferably have a high hydrogen overvoltage and a high oxygen overvoltage. Examples of the electrodes 11 and 12 include carbon materials such as carbon felt, a carbon nanotube, and a graphitized material thereof.

In the redox flow battery 1 according to the present embodiment, the electrolyte including the positive electrode active material and the electrolyte including the negative electrode active material are not particularly limited, either. Electrolytes for use in conventional redox flow batteries can be employed in the redox flow battery 1. For example, in a case where the redox flow battery 1 is a vanadium-based redox flow battery, the electrolyte including the positive electrode active material is a sulfuric acid aqueous solution of a vanadium salt, i.e., a sulfuric acid aqueous solution containing tetravalent vanadium and/or pentavalent vanadium. In a charged state, the electrolyte including the positive electrode active material can be in a state where tetravalent/pentavalent vanadium ions are mixed or in a state where pentavalent vanadium ions are contained alone. In the case where the redox flow battery 1 is a vanadium-based redox flow battery, the electrolyte including the negative electrode active material is a sulfuric acid aqueous solution of a vanadium salt, i.e., a sulfuric acid aqueous solution containing divalent and/or trivalent vanadium. In a charged state, the electrolyte including the negative electrode active material can be in a state where divalent/trivalent vanadium ions are mixed or in a state where divalent vanadium ions are contained alone. It is suitable that each of the electrolyte including the positive electrode active material and the electrolyte including the negative electrode active material be an aqueous solution containing at least one electrochemically active species. Examples of the electrochemically active species include a metal ion such as a manganese ion, a titanium ion, a chromium ion, a bromine ion, an iron ion, a zinc ion, a cerium ion, and a lead ion.

In the redox flow battery 1 according to the present embodiment, the ion exchange membrane 13 is a separator membrane which allows protons (H⁺) as a charge carrier to pass therethrough, and which blocks other ions. As the ion exchange membrane, a known cation exchange membrane can be used. Specific examples of the ion exchange membrane include a perfluorocarbon polymer having a sulfonic acid group, a hydrocarbon-based polymer compound having a sulfonic acid group, a polymer compound doped with an inorganic acid such as phosphoric acid, an organic/inorganic hybrid polymer partially substituted with a functional group having proton conductivity, and a proton conductor constituted by a polymer matrix impregnated with a phosphoric acid solution or a sulfuric acid solution. Among these, a perfluorocarbon polymer having a sulfonic acid group is preferable, and Nafion® is more preferable.

As described above, the redox flow battery 1 according to the present embodiment, in which the hydrogen gas amount decreasing means 40 is provided on the negative electrode-side pipe (the negative electrode-side forward pipe 31, the negative electrode-side return pipe 32) connecting the battery cell 10 to the negative electrode-side electrolyte tank 30, is capable of effectively inhibiting a pressure increase that can be caused by generation of hydrogen gas at the negative electrode 12. Thus, the redox flow battery 1 with high reliability can be provided.

### EXPLANATION OF REFERENCE NUMERALS

- 1:: Redox Flow Battery
- 10:: Battery Cell
- 11:: Positive Electrode
- 12:: Negative Electrode
- 13:: Ion Exchange Membrane
- 14:: Positive Electrode-Side Cell
- 15:: Negative Electrode-Side Cell
- 20:: Positive Electrode-Side Electrolyte Tank
- 21:: Positive Electrode-Side Forward Pipe
- 22:: Positive Electrode-Side Return Pipe
- 23:: Pump
- 30:: Negative Electrode-Side Electrolyte Tank
- 31:: Negative Electrode-Side Forward Pipe
- 32:: Negative Electrode-Side Return Pipe
- 33:: Pump
- 40:: Hydrogen Gas Amount Decreasing Means
- 50:: Gas-Liquid Separation Device
- 51:: Pipe
- 60:: Hydrogen Gas Amount Decreasing Device

## Claims

1. A redox flow battery comprising:
a battery cell including a positive electrode, a negative electrode, and an ion exchange membrane separating the positive electrode from the negative electrode;
a positive electrode-side electrolyte tank provided in correspondence with the positive electrode and containing an electrolyte which includes a positive electrode active material;
a negative electrode-side electrolyte tank provided in correspondence with the negative electrode and containing an electrolyte which includes a negative electrode active material;
a positive electrode-side pipe connecting the battery cell to the positive electrode-side electrolyte tank; and
a negative electrode-side pipe connecting the battery cell to the negative electrode-side electrolyte tank, wherein
the redox flow battery performs charge and discharge by being configured to circulate the electrolytes respectively between the battery cell and the positive electrode-side electrolyte tank through the positive electrode-side pipe connecting the battery cell to the positive electrode-side electrolyte tank and between the battery cell and the negative electrode-side electrolyte tank through the negative electrode-side pipe connecting the battery cell to the negative electrode-side electrolyte tank, and
a hydrogen gas amount decreasing means having a hydrogen gas amount decreasing device is provided on the negative electrode-side pipe.

2. The redox flow battery according to claim 1, wherein
the hydrogen gas amount decreasing means has a gas-liquid separation device provided on the negative electrode-side pipe, and
the hydrogen gas amount decreasing device communicates with the gas-liquid separation device.

3. The redox flow battery according to claim 1, wherein
the hydrogen gas amount decreasing device is a hydrogen gas absorption device that absorbs hydrogen gas or a hydrogen gas oxidation device that oxidizes hydrogen gas.

4. The redox flow battery according to any one of claims 1 to 3, wherein
the negative electrode-side pipe includes:
a negative electrode-side forward pipe as a supply path through which the electrolyte is supplied from the negative electrode-side electrolyte tank to the battery cell; and
a negative electrode-side return pipe as a discharge path through which the electrolyte is discharged from the battery cell to the negative electrode-side electrolyte tank, and
the hydrogen gas amount decreasing means is provided on the negative electrode-side return pipe.

5. The redox flow battery according to claim 4, wherein
the battery cell includes a positive electrode-side cell on a side of the positive electrode and a negative electrode-side cell on a side of the negative electrode, the positive electrode-side cell and the negative electrode-side cell being partitioned from each other by the ion exchange membrane,
the negative electrode-side return pipe connects the negative electrode-side cell to the negative electrode-side electrolyte tank, and
the negative electrode-side cell has a discharge port through which the electrolyte is discharged, and which is located on a top of the negative electrode-side cell.

6. The redox flow battery according to claim 4 or 5, wherein
the hydrogen gas amount decreasing means is provided at a location on the negative electrode-side return pipe, the location being adjacent to the battery cell.

7. The redox flow battery according to any one of claims 1 to 6,
the redox flow battery being a vanadium-based redox flow battery.
